# EUROPÄISCHE PATENTANMELDUNG

(11) **EP 0 640 442 A1**
(43) Veröffentlichungstag der Anmeldung: **01.03.1995**
(21) Anmeldenummer: 94112197.2
(22) Anmeldetag: 04.08.1994
(51) Int. Cl.: B24C 9/00

(54) **Ortsveränderliche Vorrichtung für eine Bereitstellung aufbereitbaren Strahlmittels**

(30) Priorität: 06.08.1993 DE 9311719 U
(71) Anmelder: HEINRICH SCHLICK GmbH, D-48268 Greven-Reckenfeld (DE)
(72) Erfinder: Beneke, Roger, D-48268 Greven (DE)
(74) Vertreter: Hoffmeister, Helmut, Dr. Dipl.-Phys.

(57) **Zusammenfassung**

Die Erfindung betrifft eine Vorrichtung für die Bereitstellung aufbereitbaren Strahlmittels mit
- einer Strahlmittelaufbereitungseinheit (90), die einen Zyklonenvorabscheider (9) zur Aufnahme abrasiver Stoffe (31) enthält,
- einem Vorratsbehältnis (13) zur Aufnahme des Strahlmittels (36),
- einem Druckstrahlmittelbehälter (15) zur Bereitstellung des für einen Strahlvorgang benötigten Strahlmittels (36) und
- wenigstens einer Mischkammer (16) zur Verteilung des benötigten Strahlmittels (36).

Die Vorrichtung ist dadurch gekennzeichnet, daß
- der Zyklonenvorabscheider (9) mit einer Reinigungs- und Trocknungseinheit (10) verbunden ist und
- daß in der Reinigungs- und Trocknungseinheit (10) ein Reinigungs- und ein Trocknungsbereich (100, 200) mit darin untergebrachten luft- und materialdurchlässigen Flächenelementen (101, 200) zusammenarbeitend angeordnet sind. Der Reinigungsbereich ist über dem Trocknungsbereich (200) angeordnet.

## Beschreibung

Die Erfindung betrifft eine ortsveränderliche Vorrichtung für eine Bereitstellung aufbereitbaren Strahlmittels mit
- einer Strahlmittelaufbereitungseinheit, die einen Zyklonvorabscheider zur Aufnahme abrasiver Stoffe enthält,
- einem Vorratsbehältnis zur Aufnahme des Strahlmittels,
- einem Druckstrahlmittelbehälter zur Bereitstellung des für einen Strahlvorgang benötigten Strahlmittels und
- wenigstens einer Mischkammer zur Verteilung des benötigten Strahlmittels.

Ortsveränderliche Vorrichtungen für eine Bereitstellung aufbereitbaren Strahlmittels sind seit einer Vielzahl von Jahren bekannt. Sie bestehen aus einem zentralen Vorratsbehälter, dem auf der einen Seite aufbereitbares Strahlmittel zugeführt wird. Die Aufbereitung erfolgt dabei derart, daß beim Strahlen anfallende abrasive Stoffe, das heißt Strahlmittel vermischt mit Farbresten, Rost und dgl., in einer Strahlmittelaufbereitungseinheit mit einem Zyklonvorabscheider gereinigt werden. Das so gereinigte Strahlmittel gelangt in den Vorratsbehälter um von dort auf der anderen Seite über einen Druckstrahlmittelbehälter einer Mischkammer zugeführt zu werden.

Diese Form des Einsatzes von Strahlmittel hat sich bewährt. Allerdings wird in der Strahlmittelaufbereitungseinheit aus den ankommenden abrasiven Stoffen nur unvollkommen das Strahlmittel herausgelöst. Dadurch können Lack- und Rostreste und darüberhinaus feuchte Strahlmittel in den zentralen Vorratsbehälter gelangen. Das Strahlmittel verliert hierdurch seine Einsatzfähigkeit und muß in seiner Gesamtheit nach einer nur kurzen Einsatzdauer erneuert werden.

Der Erfindung liegt die Aufgabe zugrunde, eine ortsveränderliche Vorrichtung für eine Bereitstellung aufbereitbaren Strahlmittels zu schaffen, die eine saubere Aufbereitung und eine längere Einsatzdauer des Strahlmittels ermöglicht.

Diese Aufgabe wird erfindungsgemäß dadurch gelöst, daß
- der Zyklonvorabscheider mit einer Reinigungs- und Trocknungseinheit verbunden ist und
- daß in der Reinigungs- und Trocknungseinheit ein Reinigungs- und ein Trocknungsbereich mit darin untergebrachten luft- und materialdurchlässigen Flächenelementen zusammenarbeitend angeordnet sind.

Die mit der Erfindung erzielten Vorteile bestehen insbesondere darin, daß aus den abrasiven Stoffen das Strahlmittel sehr sauber herausgesichtet werden kann. ImLaufe der Anwendung der Vorrichtung wird das beim Strahlen feucht gewordene Strahlmittel sehr intensiv getrocknet, so daß auch noch kleinste Reste von Verschmutzungen von ihm abfallen. Dieses sehr saubere Strahlmittel wird dem zentralen Mischbehälter für einen neuen Einsatz wiederzugeführt. Hierdurch ist es möglich, Mehrwegstrahlmittel - vorzugsweise Stahl-Strahlmittel- bis zu zweihundertfünfzigmal wiederzuverwenden. Erst danach ist ein Austausch erforderlich. Zwischenzeitlich brauchen lediglich geringe Mengen verstrahlten Strahlmittels ergänzt zu werden. Hierdurch wird der gesamte Strahlvorgang insgesamt umweltfreundlicher und insbesondere wesentlich wirtschaftlicher.

Vorteilhaft ist es, wenn der Reinigungsbereich über dem Trocknungsbereich angeordnet ist. Hierdurch ist es möglich, daß das gereinigte Strahlmittel im freien Fall für eine Trocknung in den Trocknungsbereich fallen kann. Die dabei sich vollziehende weitestgehende Vereinzelung der einzelnen Strahlmittelteilchen fördern den Trocknungsvorgang.

Vorteilhaft ist es, wenn im Reinigungsbereich ein als rotierende Siebtrommel ausgebildetes Flächenelement in einem trichterförmigen Sammelelement mit einem darunterliegenden Durchlaßschlitzelement angeordnet und wenn die rotierende Siebtrommel mit den aus dem Zyklonabscheider austretenden abrasiven Stoffen und einem Reinigungsluftstrom beaufschlagt ist. Dabei ist es möglich, daß die abrasiven Stoffe entweder in das Innere der rotierenden Trommel oder auf ihre äußere Oberfläche geleitet werden. Gelangen die abrasiven Stoffe in das Innere der Siebtrommel, wird durch deren Rotationsbewegung erreicht, daß das Strahlmittel hindurchfallt, während leichtere Stoffe, z. B. Staub- und Farbreste von dem ankommenden Luftstrom herausgeblasen und von dem Strahlmittel getrennt werden. Größere und schwerere Teile, wie sehr große Rost- und Farbflächen bleiben auf der Innenfläche der Trommel liegen und gelangen durch eine Rotationsbewegung nach außen. Das durch die Siebtrommel hindurchtretende Strahlmittel wird dann in dem darunter befindlichen Sammelelement gesammelt und durch das Schlitzelement für eine weitere Verarbeitung weitergeleitet.

Vorteilhaft ist es, wenn im Reinigungsbereich ein als rotierende Trocknungstrommel ausgebildetes Flächenelement mit einem darunterliegenden Sammeltrogelement angeordnet und wenn die Trocknungstrommel von einem Trocknungsluftstrom vorzugsweise einseitig umspült ist. Dabei ist es möglich, daß der Luftstrom sowohl durch das Innere als auch über den Außenumfang der Trocknungstrommel geleitet wird. Das aus dem Reinigungsbereich durch das trichterförmige Flächenelement hindurchtretende Strahlmittel wird von dem Luftstrom bereits umspült. Danach treffen die einzelnen Strahlmittelteilchen auf der Oberfläche der Trocknungstrommel auf. Der durch das Innere der Trommel hindurchtretende Strom trägt dazu bei, daß durch die Trommel hindurch Luft nach außen tritt, so daß insgesamt sämtliche Strahlmittelteilchen rundherum und allseitig getrocknet werden. Vorteilhaft ist es, wenn dabei warme Luft verwendet wird. Hierdurch läßt sich die Trocknungsphase wesentlich verkürzen.

Vorteilhaft ist es, wenn die Siebtrommel in einem Winkel von vorzugsweise 40 bis 30° und die Trocknungstrommel (202) in einem Winkel von vorzugsweise bis 0 bis 15° geneigt ist. Die Neigung wird dabei gegenüber der durch die Aufstellungsebene gebildeten Fläche gemessen. Durch die Winkelneigung der Siebtrommel wird erreicht, daß insbesondere die großen und festen Bestandteile wie Farb- und Roststücke aus dem Inneren der Siebtrommel heraustreten können. Durch die Neigung der Trocknungstrommel wird erreicht, daß in diese Trommel fallende Strahlmittelteilchen nach dem Trocknen ganz gezielt einem Strahlmittelausleitelement zugeführt werden. Das Strahlmittelausleitelement kann dabei als eine trichterförmige Verlängerung eines Förderungsschlauches ausgebildet sein. Möglich ist es natürlich auch, anstelle der Neigungswinkel Fördereinrichtungen, z.B. Schneckenförderer mit einer entsprechenden Schneckensteigung zu verwenden.

Vorteilhaft ist es, wenn die Sieb- und die Trockentrommeln mit Durchbrechungen versehen sind, die Durchmessern des für einen Strahlvorgang eingesetzten Strahlmittels entsprechen. Hierdurch wird gewährleistet, daß nur das Strahlmittel einer weiteren Verwendung zugeführt wird, das über ausreichende Strahlungseigenschaften verfügt. Vorteilhaft ist es, wennd er Zyklonabscheider in einem Vakuum- und in einen Normaldruckbereich unterteilt ist, so daß durch einen Anschluß der Reinigungs- und Trockeneinheit an den Normaldruckbereich der Reinigungs- und Trocknungsbereich bei Atmosphärendruck arbeitet. Hierdurch ist gewährleistet, daß die ankommenden abrasiven Stoffe bei im wesentlichen normalem Luftdruck behandelt werden. Darüberhinaus fallen die einzelnen Strahlmittelteilchen unmittelbar in den Trockenbereich, so daß insgesamt ein vollkommen sauberes Strahlmittel bei Normaldruck in den Vorratsbehälter eingegeben werden kann, um danach wieder in einen Überdruckbereich für ein Verstrahlen bereit zu stehen. Von besonderem Vorteil ist also, daß so der für ein Ansaugen der abrasiven Stoffe ausgebildete Unterdruckbereich sicher von dem für ein Verstrahlen des Strahlmittels zuständigen Überdruckbereichs sicher getrennt wird und daß in einem im wesentlichen unter Normaldruck stehenden Aufbereitungs- und Speicherbereich das aufbereitbare Strahlmittel zur Verfügung gestellt wird.

Vorteilhaft ist es, in die Reinigungs- und Trockeneinheit und die in ihr befindlichen Teile des Reinigungsund des Trockenbreichs aus einem geräuschdämpfenden und strahlmittel-resistentem Material, z. B. mit Gummi oder Gummigewebe überzogenem Stahlteilen, bestehen. Hierdurch wird gewährleistet, daß die Aufbereitung des Strahlmittels möglichst geräuscharm vollzogen wird. Vorteilhaft ist es insbesondere, wenn auch beide Trommeln aus diesem Material ausgebildet werden.

Vorteilhaft ist es, wenn in das Durchlaßelement eine Platte mit Ausnehmungen, z. B. ein Sieb, einlegbar ist. Das aus der Reinigungs- in die Trockeneinheit fallende Strahlmittel kann so insbesondere nochmals nachsortiert werden.

In der Zeichnung ist der Erfindungsgegenstand dargestellt.

Es zeigen:

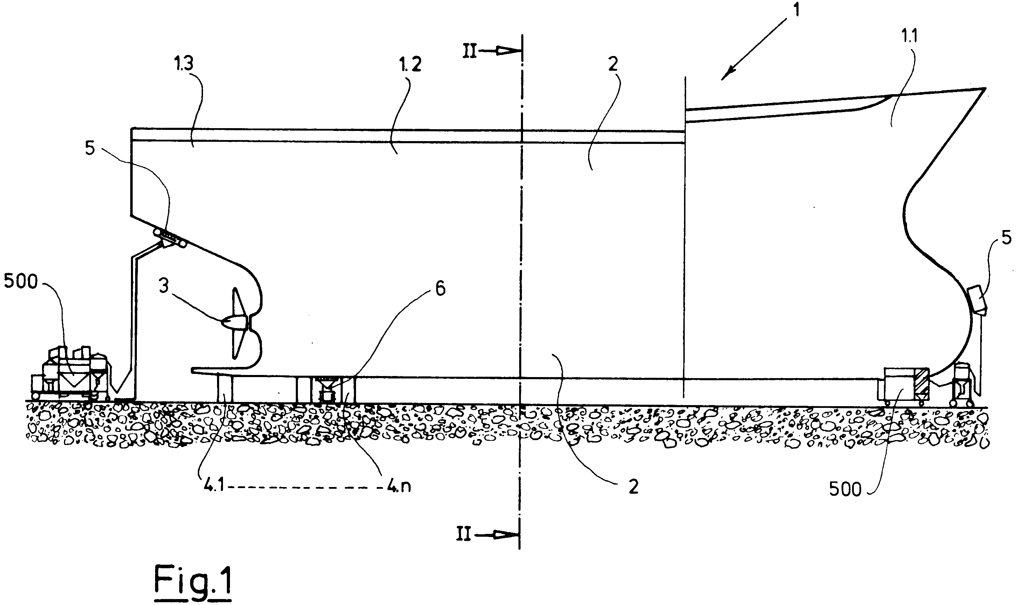

- Fig. 1: ein Schiff in einer schematischen Seitenansicht mit daran arbeitenden Oberflächenbehandlungsvorrichtungen und zugeordneten ortsveränderlichen Vorrichtungen für eine Bereitstellung aufbereitbaren Strahlmittels;
- Fig. 2: eine schematische Darstellung eines Mittelschiffs entlang einer Linie II - II mit einer zugeordneten Oberflächenbehandlungsvorrichtung;
- Fig. 3: eine ortsveränderliche Vorrichtung für eine Bereitstellung aufbereitbaren Strahlmittels in einer schematischen Seitenansicht; und
- Fig. 4: eine Reinigungs- und Trockeneinheit mit einer Vorrichtung gemaß Fig. 3 in einer teilgeschnittenen perspektivischen Darstellung.

Für eine Oberflächenbehandlung wird ein Schiffskörper 1 eines in folgende Bearbeitungssektionen eingeteilt:
a) einen sich durch eine hohe Neigung und Krümmung der Wände 2 auszeichnenden Bugbereich 1.1,
b) einen sich durch im wesentlichen senkrechte Wände 2 auszeichnenden Mittelbereich 1.2,
c) einen sich durch scharfe Ein- und Ausbuchtungen bzw. vorstehende Teile - Schiffsschraube 3 - auszeichnenden Heckbereich 1.3 und
d) einen sich im wesentlichen geraden horizontal liegenden Bodenbereich 1.4.

Für eine Oberflächenbehandlung, insbesondere ein Strahlen mit abrasiven Strahlmitteln, wird der Schiffskörper 1 aus dem Wasser gehoben, z. B. mit Hilfe eines Schwimmdocks, und im Bodenbereich 1.4 und gegebenenfalls im Mittelbereich mit Schiffspallen 4.1, ...4.n abgestützt. Da die Liegezeiten im Schwimmdock mit hohen Kosten verbunden sind, werden zu einem schnellen Abstrahlen des Schiffskörpers 1 im Bugbereich 1.1 und im Heckbereich 1.3 fahrbare Düsenflächenstrahlgeräte 5 eingesetzt, die sich dadurch auszeichnen, daß sie mit Hilfe von an ihrem Fahrwerk angeordneten Magneten sich ohne jegliche Abstützung auf der Schiffsaußenhaut fortbewegen können und so für das Strahlen dieser sehr schwierigen Bereiche besonders geeignet sind.

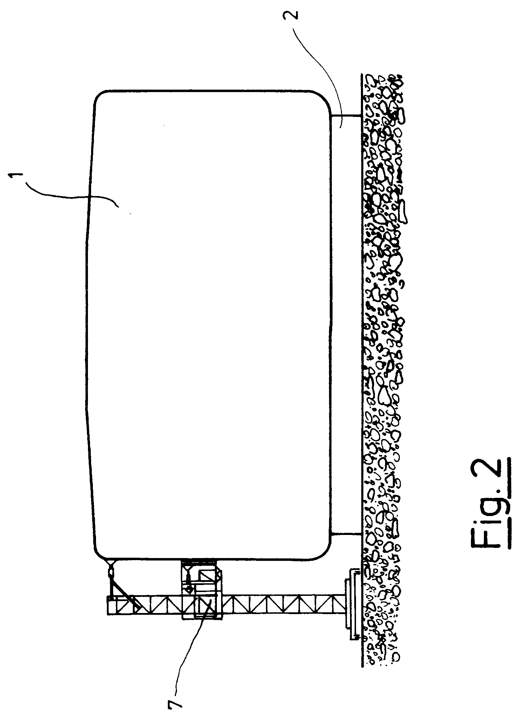

Im Bodenbereich 1.4 kommt ein Bodenflächenstrahlgerät 6 zum Einsatz, das durch seine besonders ausgestaltete Strahlkapsel sehr sauber den Bodenbereich bestrahlen kann. Im flächenmäßig sehr großen und hohen Mittelbereich 1.2 wird, wie insbesondere Fig. 2 zeigt, ein Vertikal-Flächenstrahlgerät 7 verwendet. Seine verlängerbaren Maste werden mit einer Andockvorrichtung an der Schiffswand 2 befestigt, so daß sich die besonders ausgebildete Strahlkabine wie ein Fahrstuhl längs der Schiffswand 2 auf- und abbewegen kann. Allen Oberflächenbehandlungseinrichtungen 5, 6 und 7 ist gemeinsam, daß ihre Strahlkapseln bzw. Kabinen gegenüber der Schiffswand abgedichtet sind, so daß zum einen kein Strahlmittel 36 ins Freie gelangen kann und zum anderen, was sehr wesentlich ist, Mehrwegstrahlmittel einsetzbar sind.

Beim Strahlen eingesetzte und verbrauchte Strahlmittel werden vermischt mit Lackmittel- und Rostfladenresten als abrasive Stoffe 31 über eine Ansaugleitung 8 einer ortsveränderlichen Vorrichtung für eine Bereitstellung aufbereitbaren Strahlmittels - im folgenden mit Strahlmittelaufbereitungsanlage 500 bezeichnet - zugeleitet.

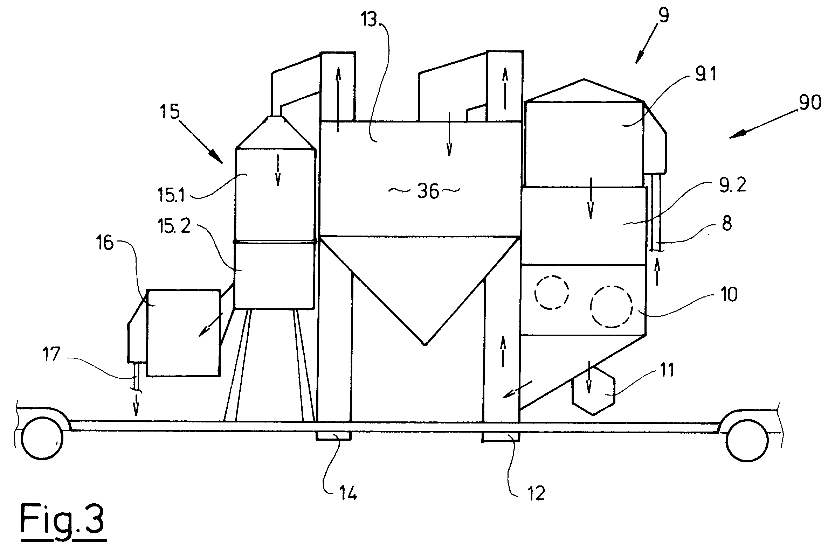

Eine solche Strahlmittelaufbereitungsanlage 500 (siehe Fig. 3) besteht aus einem Zyklonabscheider 9, der in einen Vakuumbereich 9.1 und einen Normaldruckbereich 9.2 unterteilt ist, an den sich, wie insbesondere Fig. 3 zeigt, eine Reinigungs- und Trockeneinheit 10 anschließt. Wesentlich ist, daß innerhalb der Reinigungs- und Trocknungseinheit 10 ein Reinigungsbereich 100 unterteilt von einem Trocknungsbereich 200 angeordnet sind.

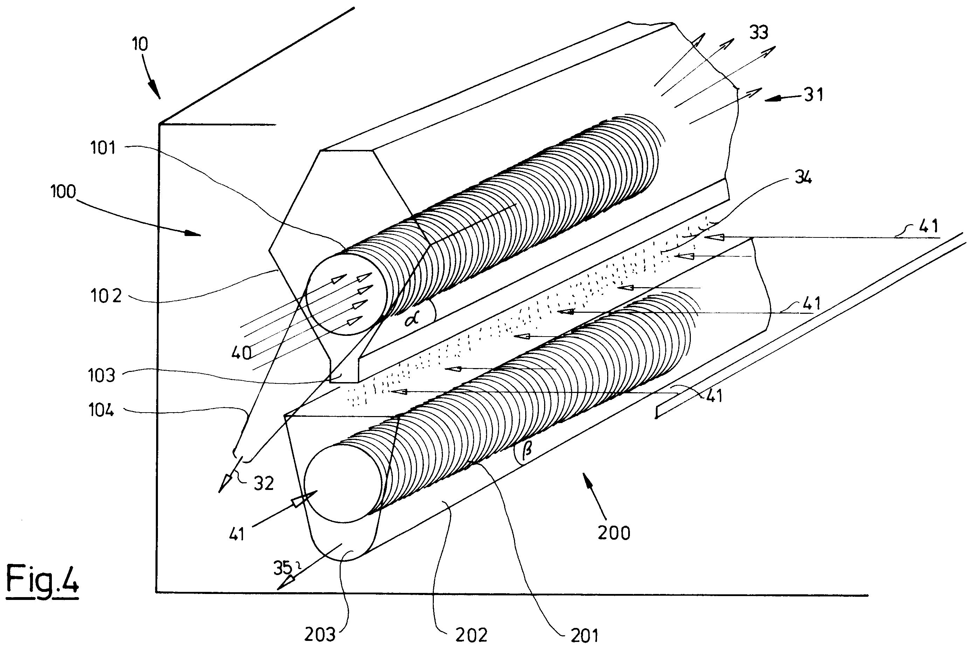

Wie Fig. 4 zeigt, verfügt der Reinigungsbereich 100 über eine Siebtrommel 101, die gegenüber der Waagerechten um einen Winkel α geneigt werden kann. Die Siebtrommel kann dabei aus einem Hohlzylinder bestehen, in dessen glatte Oberfläche Durchbrechungen in Form von Bohrungen, Schlitzen und dgl. eingebracht sind. Möglich ist auch, auf ein zylindrisches Trommelgestell ein spezielles Siebgeflecht aufzulegen. Diese Konstruktion hat den Vorteil, daß bei hohem Verschleiß nicht die gesamte Siebtrommel 101, sondern nur das äußere Siebgeflecht erneuert werden muß.

Um die Siebtrommel 101 herum ist ein nach unen sich trichterförmig verjüngendes Sammelelement 102 angeordnet, in dem sich die Siebtrommel 101 dreht. Das Sammelelement 102 ist nach oben geschlossen und an der Vorder- und an der Rückseite offen. Unterhalb des Sammelelementes 102 schließt sich ein langgestrecktes Durchlaßschlitzelement 103 an. Vorteilhaft ist es, wenn in ihm ein spezielles Sieb angeordnet ist (nicht dargestellt), durch das das aus der Siebtrommel fallende, gesiebte Material nochmals klassifiziert werden kann. Vorteilhafterweise haben die Durchbrechungen der Siebtrommel 101 einen solchen Durchmesser, daß nur das für einen Strahlmittelvorgang benötigte Strahlmittel hindurchfallen kann. An einer Seite des trichterförmigen Sammelelementes 102 ist ein Ableitelement 104, z. B. ein schräggestelltes, trichterförmig ausgebildetes Rohr angeordnet.

Unterhalb des trichterförmigen Sammelelementes 102 ist im Trocknungsbereich 200 eine Trockentrommel 201 installiert. Sie dreht sich in einem Sammeltrogelement 202, das an einer seiner Seiten ein Strahlmittelausleitelement 203 aufweist. Die Trockentrommel 201 kann in einem Winkel β gegenüber der Waagerechten geneigt werden. Vorteilhaft ist es, wenn der Winkel α vorzugsweise 0 bis 30° und der Winkel β 0 bis 15° beträgt. Auch andere Neigungswinkel sind einzustellen, die von der Fließfähigkeit der jeweiligen abzuleitenden Objekte bestimmt sind.

Unterhalb der Reinigungs- und Trocknungseinheit 10 befindet sich ein Verunreinigungsauffangbehälter 11. In der Mitte der Strahlmittelaufbereitungsanlage 500 ist ein Vorratsbehältnis 13 angeordnet, das zu beiden Seiten jeweils von einem Becherwerk 12 und einem Becherwerk 14 tangiert ist.

Der Strahlmittelaufbereitungseinheit 90 gegenüber, die, wie bereits beschrieben, aus dem Zyklonabscheider 9 und der Reinigungs- und Trocknungseinheit 10 besteht, ist auf der gegenüberliegenden Seite des Vorratsbehälters 13 ein Druckstrahlmittelbehälter 15, zugeordnet. Letzter unterteilt sich in einen Normaldruckbereich 15.1 und in einem Überdruckbereich 15.2. Bei dem Druckstrahlmittelbehälter 15 handelt es sich um einen Doppelkammer-Druckstrahlbehälter, der aus einer Kammer, in der Normaldruck (15.1) und einer Kammer, in der Überdruck (15.2) herrscht, besteht. Die Kammer 15.1 wird dabei im Prinzip nie geleert. Das hat den Vorteil, daß ständig ohne Füllunterbrechung gestrahlt werden. Beim Strahlbetrieb ist die Kammer 15.1 mit unter Druck. Wird die Kammer 15.2 drucklos gemacht, d.h. entlüftet, öffnet sich eine Klappe, das Becherwerk 12 wird eingeschaltet und die Kammer 15.1 entlüftet. Ist die Kammer 15.1 gefüllt, wird das Becherwerk 12 abgeschaltet, die Klappe geschlossen und ein Kegel geöffnet. Hierdurch kommt es zu einem Druckausgleich zwischen den Kammern 15.1 und 15.2. Das Strahlmittel fällt dabei von der Kammer 15.1 in die Kammer 15.2 während des Strahlbetriebs.

An den Überdruckbereich 15.2 schließt sich wenigstens eine Mischkammer 16 an, an der jeweils ein Strahlschlauch 17 angeschlossen ist. Die Mischkammern 16 befinden sich dabei direkt unterhalb des Druckstrahlmittelbehälters 15. Sie werden ferngesteuert (mittels elektropneumatischer Fernbedienung), und zwar geöffnet bzw. geschlossen. Über die Mischkammern 16 wird das Strahlmittel über den Behälterdruck in den Strahlschlauch 17 und mittels der Transportdruckluft zur Strahldüse transportiert. Die Durchflußöffnung in der Mischkammer 16 kann manuell voreingestellt werden.

Um die Standzeiten innerhalb des Schiffsdocks auf ein Minimum herabzusetzen, werden bis zu vier Strahlvorrichtungen an eine Strahlmittelaufbereitungsanlage 500 angeschlossen. Dabei werden die beim Strahlvorgang durch die Düsenflächenstrahlgeräte 5, das Bodenflächenstrahlgerät 6 und das Vertikalflächenstrahlgerät 7 abgegebenen abrasiven Stoffe 31 über die Ansaugleitung 8 in die Zyklonvorabscheider 9 gegeben. Hier erfolgt insbesondere eine Vorreinigung bzw. eine Trennung des Unterdrucks in einen Normaldruck. Danach werden die abrasiven Stoffe 31 auf die sich drehende Siebtrommel 31 gegeben. Sie können dabei vorteilhafterweise in das Innere der Trommel oder aber auch auf diese aufgegeben werden. Darüberhinaus wird die Siebtrommel 101 mit einem Reinigungsluftstrom 100 beaufschlagt. Dieser Reinigungsluftstrom kann von einer speziellen Lüfteranlage erzeugt werden. In der Siebtrommel 101 werden die abrasiven Stoffe 31 durch die Drehbewegung und den Luftstrom 40 durcheinandergewirbelt und Verunreinigungen 32, Staub- und Farbpartikel 33 und feuchte Strahlmittel 34 voneinander getrennt. Die Verunreinigungen 32, die insbesondere durch große Lackstückreste bzw. Rostfladen gebildet werden, werden über das Ableitelement abgeführt. Die leichteren Staub- und Farbpartikel werden ausgeblasen und die schwereren und kleinen Strahlmittelteilchen durch die Ausnehmungen der Siebtrommel hindurchgeführt. Dort werden sie in dem trichterförmigen Sammelelement 102 aufgefangen und fallen durch das Durchlaßschlitzelement 104 nach einer weiteren Sichtsiebung im freien Fall heraus. Dort wird das noch feuchte Strahlmittel 34 allseitig von einem Trocknungsluftstrom 41 umgeben. Dieser Trocknungsluftstrom 41 durchdringt und/oder tangiert die Zylinderoberfläche der sich drehen-den Trocknungstrommel. Dadurch wird erreicht, daß die sich vereinzelnden Teile des Feuchtstrahlmittels 34 allseitig von trockner Luft umgeben sind und so als trockenes und gereinigtes Strahlmittel 35 in das Sammeltrogelement 202 fallen.

Durch verschiedene Neigungswinkel α und β wird erreicht, daß zum einen die Verunreinigungen 32 sicher abgeleitet und zum anderen das trockene und gereinigte Strahlmittel 35 gesammelt werden kann. Die Verunreinigungen 32 werden dabei in den Verunreinigungsauffangbehälter 11 abgeführt und das trockene und gereinigte Strahlmittel 35 als Strahlmittel 36 dem Becherwerk 12 zugeleitet. Das Becherwerk 12 transportiert das Strahlmittel 36 in den Vorratsbehälter 13, aus dem es mit Hilfe des Becherwerks 14 entnommen wird und in den Normaldruckbereich 15.1 des Drucksammelbehälters 15 eingegeben wird.

Im Überdruckbereich 15.2 wird Druckluft zugeführt und über die jeweilige Mischkammer 16 über den zugehörigen Strahlschlauch 17 die Düsenflächenstrahlgeräte 5, das Bodenflächenstrahlgerät 6 und das Vertikalflächenstrahlgerät 7 versorgt. Wesentlich ist dabei, daß der gesamte Strahlvorgang staubfrei stattfindet und das Strahlmittel im Kreislauf gefahren und aufbereitet wird. Die Trennung des Vakuumbereichs 9.1 und des Überdruckbereichs 15.2 vom Vorratsbehälter 13 ermöglicht insbesondere, diesen Kreislauf. Im Gegensatz zu dem üblicherweise beim Strahlen von Schiffen verwendeten Einwegstrahlmittels kann durch die Strahlmittelaufbereitungsanlage 500 Mehrwegstrahlmittel - vorzugsweise Stahl-Strahlmittel - eingesetzt werden. Dieses Strahl-Stahlmittel kann im Gegensatz zum Einwegstrahlmittel - in der Regel Kupferschlakke - bis zu zweihundertfünfzigmal verwendet werden. Hierdurch wird der gesamte Strahlvorgang insgesamt umweltfreundlicher und insbesondere wesentlich wirtschaftlicher.

## Patentansprüche

1. Ortsveränderliche Vorrichtung für die Bereitstellung aufbereitbaren Strahlmittels mit
- einer Strahlmittelaufbereitungseinheit (90), die einen Zyklonenvorabscheider (9) zur Aufnahme abrasiver Stoffe (31) enthält,
- einem Vorratsbehältnis (13) zur Aufnahme des Strahlmittels (36),
- einem Druckstrahlmittelbehälter (15) zur Bereitstellung des für einen Strahlvorgang benötigten Strahlmittels (36) und
- wenigstens einer Mischkammer (16) zur Verteilung des benötigten Strahlmittels (36),
dadurch gekennzeichnet, daß
- der Zyklonenvorabscheider (9) mit einer Reinigungs- und Trocknungseinheit (10) verbunden ist und
- daß in der Reinigungs- und Trocknungseinheit (10) ein Reinigungs- und ein Trocknungsbereich (100, 200) mit darin untergebrachten luft- und materialdurchlässigen Flächenelementen (101, 200) zusammen-arbeitend angeordnet sind.

2. Vorrichtung nach Anspruch 1, dadurch gekennzeichnet, daß der Reinigungsbereich (100) über dem Trocknungsbereich (200) angeordnet ist.

3. Vorrichtung nach Anspruch 1 oder 2, dadurch gekennzeichnet,
- daß im Reinigungsbereich (100) ein als rotierende Siebtrommel (101) ausgebildetes Flächenelement in einem trichterförmigen Sammelelement (102) mit einem darunterliegenden Durchlaß-Schlitzelement (104) angeordnet und
- daß die rotierende Siebtrommel (101) mit aus dem Zyklonen-Vorabscheider (9) austretenden abressiven Stoffen (31) und einem Reinigungsluftstrom (40) beaufschlagt ist.

4. Vorrichtung nach Anspruch 1 bis 3, dadurch gekennzeichnet,
- daß im Reinigungsbereich (200) ein als rotierende Trocknungstrommel (201) ausgebildetes Flächenelement mit einem darunterliegenden Sammeltrogelement (202) angeordnet und
- daß die Trocknungstrommel (201) mit einem Trocknungsluftstrom (41) umspült ist.

5. Vorrichtung nach einem der Ansprüche 1 bis 4, dadurch gekennzeichnet, daß die Siebtrommel (101) um einen Winkel α vorzugsweise von 0 bis 30° und die Trocknungstrommel (202) um einen Winkel β vorzugsweise von 0 bis 15° geneigt ist.

6. Vorrichtung nach einem der Ansprüche 1 - 5, dadurch gekennzeichnet, daß die Sieb- und Trockentrommel (101, 102) mit Durchbrechungen versehen sind, die Durchmessern des für einen Strahlvorgang eingesetzten Strahlmittels (36) entsprechen.

7. Vorrichtung nach einem der Ansprüche 1 bis 6, dadurch gekennzeichnet, daß der Zyklonenabscheider (9) in einen Vakuum- und einen Normaldruckbereich (9.1, 9.2) unterteilt ist, so daß durch einen Anschluß der Reinigungs- und Trockeneinheit (10) an den Normaldruckbereich (9.2) der Reinigungs- und der Trockenbereich (100, 200) etwa bei Atmosphärendruck arbeiten.

8. Vorrichtung nach einem der Ansprüche 1 bis 7, dadurch gekennzeichnet, daß die Reinigungs- und Trockeneinheit (10) und in ihr befindliche Teile des Reinigungs- und des Trockenbereichs (100, 200) aus einem geräuschdämpfenden und Strahlmittel resistenten Material, z. B. mit Gummi oder Gummigewebe, überzogenen Stahlteilen, bestehen.

9. Vorrichtung nach einem der Ansprüche 1 - 8, dadurch gekennzeichnet, daß in das Durchlaßelement (103) eine Platte mit Ausnehmungen, z. B. ein Sieb, einlegbar ist.
